# EUROPÄISCHE PATENTSCHRIFT

(11) **EP 0 508 294 B1**
(45) Veröffentlichungstag und Bekanntmachung des Hinweises auf die Patenterteilung: **19.07.1995**
(21) Anmeldenummer: 92105612.3
(22) Anmeldetag: 01.04.1992
(51) Int. Cl.: C04B 41/87, C04B 41/50

(54) **Kohlenstoffkörper mit Siliziumkarbid-Beschichtung und Verfahren zu ihrer Herstellung**
Silicon carbide coated carbonaceous bodies and a method for their manufacture
Corps en carbone revêtus de carbure de silicium, et procédé pour leur fabrication

(30) Priorität: 06.04.1991 DE 4111190
(43) Veröffentlichungstag der Anmeldung: 14.10.1992
(73) Patentinhaber: Hoechst CeramTec Aktiengesellschaft, 95100 Selb (DE)
(72) Erfinder: Pollak, Wolfgang, W-8672 Selb (DE)
(74) Vertreter: Hoffmann, Peter, Dipl.-Chem.

(56) Entgegenhaltungen:
- EP-A- 0 133 315
- US-A- 3 140 193
- US-A- 3 275 471

## Beschreibung

Die vorliegende Erfindung betrifft Kohlenstoffkörper, deren Oberflächen mit einer Schicht aus siliziuminfiltriertem Siliziumkarbid (= SiSiC) bedeckt sind und ein Verfahren zu ihrer Herstellung ausgehend von Kohlenstoff-Bauteilen.

Graphitkugeln werden unter anderem in der Kernenergietechnik eingesetzt. Dabei stört es, daß durch die geringe Härte des Graphits feinteiliger Abrieb in großen Mengen entsteht, wenn die Kugeln mechanischen Scherkräften ausgesetzt werden. Ferner werden Bauteile aus Graphit in elektrischen Öfen in Gegenwart von flüssigem Silizium, bei der Herstellung von SiSiC-Körpern verwendet. Hierzu zählen z.B. Brennhilfsmittel, Heizelemente und Konstruktionsbauteile in der Heizzone aus Graphit. Hierbei ist es von Nachteil, daß Graphit bei unmittelbarem Kontakt mit schmelzflüssigem elementarem Silizium zu Siliziumkarbid reagiert. Das flüssige Silizium dringt durch das relativ große Porensystem des z.B. stranggezogenen Graphits in den Kohlenstoffkörper ein und wandelt sich exotherm in Siliziumkarbid um. Je größer das Porensystem und die Korngröße ist, umso besser kann flüssiges Silizium nachdiffundieren. Da das gebildete Siliziumkarbid wegen seiner Kristallstruktur mehr Raum einnimmt als der reagierende Kohlenstoff, kommt es zu Rißbildungen und Aufschieferungen am Bauteil. Dieser Mechanismus führt nachteiligerweise innerhalb kürzester Zeit zur gründlichen Zerstörung des Bauteils.

Anders verhalten sich allerdings Graphitkörper, die durch ein isostatisches Preßverfahren hergestellt werden und eine vergleichsweise hohe Dichte, feinkörniges Gefüge und eine geringere Porösität aufweisen. Gegenüber flüssigem Silizium reagieren diese Graphitkörper im Prinzip gleich; jedoch unterbinden die engen Porenkanäle nach einer ersten Reaktion an der Oberfläche des Graphits zu Siliziumkarbid ein weiteres Nachdiffundieren von Silizium in das Innere des Bauteils, da die mit der Reaktion einhergehende Volumenvergrößerung das Porensystem verkleinert oder es gänzlich verschließt. Solche Graphit-Qualitäten sind jedoch nicht in allen Bauteildimensionen verfügbar und im übrigen wesentlich teurer.

US 3,275,471 lehrt ein Verfahren zur Passivierung einer Graphit enthaltenden Reaktorkomponente gegenüber Sauerstoff, bei dem die Reaktorkomponente in einen Schlicker aus im wesentlichen gleichen Anteilen von fein verteiltem Silizium und Siliziumkarbid sowie aus einem Stellmittel getaucht wird und über 5 bis 25 s bei 1415 bis 1500°C gebrannt wird. Die Reaktorkomponente wird vorzugsweise durch mehrfaches Eintauchen in den Schlicker beschichtet und nach jedem einzelnen Beschichtungsvorgang gebrannt. Aufgrund der erforderlichen Neutronendurchlässigkeit wird die Gesamtdicke der Passivierung auf maximal 0,13 mm (0,005 Zoll) begrenzt.

Der Erfindung liegt die Aufgabe zugrunde, poröse Kohlenstoffkörper so auszubilden, daß sie gegenüber der Einwirkung von schmelzflüssigem Silizium unempfindlich und dauerbeständig sind.

Es wurde schon versucht, Bauteile aus porösem Kohlenstoff durch unmittelbare Kontaktierung mit flüssigem Silizium während des Infiltrationsbrandes von SiSiC-Bauteilen mit Siliciumüberschuß nur an der Oberfläche mit Siliziumkarbid zu beschichten, dabei bildete sich aber keine gleichmäßige, geschlossene Siliziumkarbidschicht, sondern es kam zu erheblichen Aufschieferungen und Bauteilrissen. Weitere Versuche, die Oberfläche von porösen Graphitkugeln durch ein Gemisch aus Ruß und feinem Graphitpulver mit und ohne Bindemittel zu versiegeln, ergaben, daß sich auch so keine gleichmäßige Schichtdicke erzielen läßt. Die aufgetragenen Schichten zeigten schlechte Haftung auf dem Graphit. Ein Aufschiefern beim Kontakt mit flüssigem Silizium war nicht zu verhindern.

Überraschend wurde nun ein Verfahren zur Herstellung von Kohlenstoffkörpern der eingangs genannten Gattung mit einer SiSiC-Oberfläche gefunden, das dadurch gekennzeichnet ist, daß man die Oberfläche von Kohlenstoffkorpern in nur einem Auftrag in einer Schichtdicke von größer 0,13 mm bis 5 mm mit einem wäßrigen Schlicker überzieht, der feinverteiltes Siliziumkarbid, feinverteilten Kohlenstoff und Bindemittel enthält, man den Schlicker eintrocknen läßt, man das Bindemittel durch Erhitzen zerstört und man den Überzug auf den Kohlenstoffkörpern durch Kontakt mit flüssigem Silizium siliziert.

Vorzugsweise bestehen die Kohlenstoffkörper aus Graphit. Besonders geeignet sind alle Graphitkörper die durch gängige Verfahren wie Strangziehen, Trockenpressen, isostatisches Pressen usw. hergestellt werden können. Das erfindungsgemäße Verfahren eignet sich besonders gut zur Beschichtung von Formkörpern mit unregelmäßiger Geometrie. Die erfindungsgemäß verwendeten Schlicker enthalten neben feinverteiltem Siliziumkarbid und Bindemittel noch feinverteilten Kohlenstoff, insbesondere Ruß und Graphit in Kombination, vorzugsweise im Verhältnis 1:1. Der Anteil an Siliziumkarbid im Schlicker soll möglichst hoch sein, der Anteil an Kohlenstoff soll so berechnet sein, daß das nach der Zerstörung des Bindemittels vorhandene freie Volumen bei der Silizierung durch neugebildetes Siliziumkarbid rechnerisch theoretisch ausgefüllt wird. So zusammengesetzte Schlickermassen sind bereits bekannt, z.B. bei der Herstellung von SiSiC-Brennerrohren.

Es ist möglich, daß bei der Zersetzung des Bindemittels ebenfalls Kohlenstoff gebildet wird. Dies gilt z.B. für aromatische Harze als Bindemittel.

Je nachdem, ob die Schlickerschicht gleichmäßig oder ungleichmäßig aufgetragen ist, variiert auch die Schichtdicke des Siliziumkarbidüberzuges auf der Oberfläche des Kohlenstoffkörpers. Für das Erreichen der erforderlichen Schichtdicke genügt ein einmaliger Auftrag. Die Dicke der Schlickerschicht und damit auch die der Siliziumkarbidschicht auf der Oberfläche des Kohlenstoffkörpers liegt im Bereich von größer 0,13 mm bis 5 mm.

Durch die Oberflächenreaktion des Kohlenstoffgrundkörpers mit Si zu SiC entsteht überraschend ein fester Materialverbund. Die aufgetragene und infiltrierte SiSiC-Schicht kann durch eine nachträgliche mechanische Bearbeitung oder durch einen zusätzlichen partiellen Schlickerauftrag im grünen als auch im gebrannten Zustand, am Bauteil je nach Bedarf variabel unterschiedlich beeinflußt werden. Durch Anschleifen der beschichteten Graphitkörper entstehen beispielsweise Körper, die u.a. eine ebene Graphitfläche aufweisen. Man kann einen Graphitkörper (nach Beschichtung mit SiC-Schlicker) mit einem zweiten Graphitkörper oder einem SiSiC-Körper verbinden. Bei dieser Verbindungstechnik bewirkt eine allseitige Schlickerbeschichtung nach dem Trocknen des Verbundkörpers dessen Grünfestigkeit. Nach der Infiltration mit Silizium wandelt sich die verbindende SiC-Schlickerschicht in SiSiC um, die einen beidseitig festen Verbund mit Graphit einerseits bzw. Graphit oder SiSiC andererseits gewährleistet. Durch Anschleifen entstehen hieraus Körper, die u.a. ebene Graphit- und SiSiC-Flächen aufweisen.

Durch die Dicke und die Zusammensetzung der Schlickerschicht lassen sich die physikalischen Eigenschaften der Verbundkörper variieren.

Die erhaltenen Körper weisen gegenüber schmelzflüssigem Silizium die gleiche gute Beständigkeit auf, wie hochdichte Graphit-Qualitäten. Die Verschleiß- und Erosionsfestigkeit, die Korrosionsbeständigkeit gegenüber den meisten Säuren und Laugen, die Unempfindlichkeit gegen Wärmespannungen, die hohe Wärmeleitfähigkeit und große Härte des SiSiC eröffnen erfindungsgemäß den Graphitbauteilen neue technische Einsatzmöglichkeiten. Fehler durch Bearbeitung, Risse, Poren, Verschleiß oder Abplatzer sind sowohl im grünen Zustand der Bauteile wie auch im gebrannten, durch Schlickerauftrag, Bearbeitung und anschließende Si-Infiltration reparabel.

Bauteile aus Graphit oxidieren normalerweise bei Temperaturen über 400°C. Sind solche Bauteile jedoch erfindungsgemäß mit einer homogenen SiSiC-Schicht abgedichtet, so erhöht sich die mögliche Einsatztemperatur in oxidierender Atmosphäre auf ca. 1400°C. Es könnten z.B. Brennplatten aus Kohlenstoff bei oxidierenden Schnellbränden in der Keramikindustrie genutzt werden, die die vorteilhafte hohe Thermoschockbeständigkeit und Elastizität des Graphits aufweisen.

Das erfindungsgemäße Verfahren erlaubt es, Graphitkörper allgemein, insbesondere jedoch grobkörnige und poröse, wirtschaftlich im Vakuum ohne besondere Vorrichtungen mit einer SiSiC-Schicht abzudichten bzw. zu panzern, ohne daß die Bauteile dabei zerstört werden.

## Patentansprüche

1. Verfahren zur Herstellung von Kohlenstoffkörpern mit einer Beschichtung aus siliziuminfiltriertem Siliziumkarbid, dadurch gekennzeichnet, daß man die Oberfläche von Kohlenstoffkörpern in nur einem Auftrag in einer Schichtdicke von größer 0,13 mm bis 5 mm mit einem wäßrigen Schlicker überzieht, der feinverteiltes Siliziumkarbid, feinverteilten Kohlenstoff und Bindemittel enthält, man den Schlicker eintrocknen läßt, man das Bindemittel durch Erhitzen zerstört und man den Überzug auf den Kohlenstoffkörpern durch Kontakt mit flüssigem Silizium siliziert.

2. Verfahren nach Anspruch 1, dadurch gekennzeichnet, daß ein Kohlenstoffkörper aus Graphit mit Schlicker überzogen wird.

3. Verfahren nach den Ansprüchen 1 oder 2, dadurch gekennzeichnet, daß als Kohlenstoff eine Kombination von Ruß und Graphit zugesetzt wird.

4. Verfahren nach einem der Ansprüche 1 bis 3, dadurch gekennzeichnet, daß als Bindemittel ein organisches Bindemittel zugesetzt wird.

5. Graphitkörper, dessen Oberfläche eine Beschichtung aus SiSiC in einer Schichtdicke von größer 0,13 mm bis 5 mm trägt, die dicht ist gegenüber schmelzflüssigem Silizium.

6. Graphitkörper nach Anspruch 5, dadurch gekennzeichnet, daß die Beschichtung dicht ist gegenüber oxidativen Agentien.

## Claims

1. A process for producing carbon bodies having a coating of silicon-infiltrated silicon carbide, which comprises coating the surface of carbon bodies in only one application having a layer thickness of greater than 0.13 mm to 5 mm with an aqueous slip containing finely divided silicon carbide, finely divided carbon and binder, allowing the slip to dry, destroying the binder by heating and silicizing the coating on the carbon bodies by contact with liquid silicon.

2. The process as claimed in claim 1, wherein a graphite carbon body is coated with slip.

3. The process as claimed in claims 1 or 2, wherein a combination of soot and graphite is added as carbon.

4. The process as claimed in any of claims 1 to 3, wherein an organic binder is added as binder.

5. A graphite body whose surface carries a coating of SiSiC having a layer thickness of greater than 0.13 mm to 5 mm which is sealed with respect to molten silicon.

6. The graphite body as claimed in claim 5, wherein the coating is sealed towards oxidizing agents.

## Revendications

1. Procédé pour préparer des corps en carbone avec un revêtement de carbure en silicium infiltré, caractérisé en ce que l'on revêt la surface des corps en carbone, en une seule application, d'une couche d'une épaisseur supérieure à 0,13 mm jusqu'à 5 mm, avec une bouillie aqueuse, qui comporte du carbure de silicium finement divisé, du carbone finement divisé et un liant, on fait sécher la bouillie, on détruit le liant par chauffage, et on effectue une siliciuration de la couche sur les corps de carbone par contact avec du silicium liquide.

2. Procédé selon la revendication 1, caractérisé en ce que l'on revêt un corps de carbone en graphite d'une bouillie.

3. Procédé selon les revendications 1 ou 2, caractérisé en ce que l'on ajoute en tant que carbone une combinaison de noir de carbone et de graphite.

4. Procédé selon une des revendications 1 à 3, caractérisé en ce que l'on ajoute en tant que liant un liant organique.

5. Corps en graphite dont la surface porte un revêtement en SiSiC d'une épaisseur de couche supérieure à 0,13 mm jusqu'à 5 mm, ce revêtement étant étanche au silicium liquide par fusion.

6. Corps de graphite selon la revendication 5, caractérisé en ce que le revêtement est étanche vis-à-vis des agents d'oxydation.
